# EUROPEAN PATENT APPLICATION

(11) **EP 1 406 108 A1**
(43) Date of publication of application: **07.04.2004**
(21) Application number: 02730762.8
(22) Date of filing: 29.05.2002
(51) Int. Cl.: G02B 26/02, G02B 26/08

(54) **OPTICAL SWITCH**

(30) Priority: 13.06.2001 JP 2001179056; 21.09.2001 JP 2001289330; 20.03.2002 JP 2002079393
(71) Applicant: Sumitomo Electric Industries, Ltd., Osaka-shi, Osaka 541-0041 (JP)
(72) Inventor: HIRATA, Yoshihiro, c/o Sumitomo Elec. Indus. Ltd, Ako-gun, Hyogo 678-1205 (JP); MIURA, Kousuke, c/o Sumitomo Elec. Indus. Ltd, Ako-gun, Hyogo 678-1205 (JP); OKUYAMA, Hiroshi, c/o Sumitomo Elec. Indus. Ltd, Yokohama-shi, Kanagawa 244-8588 (JP); KANIE, Tomohiko, c/o Sumitomo Elec. Indus. Ltd, Yokohama-shi, Kanagawa 244-8588 (JP); SANO, Tomomi, c/o Sumitomo Elec. Indus. Ltd, Yokohama-shi, Kanagawa 244-8588 (JP); NUMAZAWA, Toshiyuki, c/o Sumitomo Elec. Indus. Ltd, Ako-gun, Hyogo 678-1205 (JP)
(74) Representative: HOFFMANN - EITLE
(86) International application number: PCT/JP2002/005239
(87) International publication number: WO 2002/103432

(57) **Abstract**

The optical switch comprises a platform, and an optical fiber is held in a V groove for securing optical fiber of this platform. A switch element is placed on the platform. The switch element has a frame, and a plurality of alignment pins which are supplied together with the platform are disposed on the bottom face of the frame. A cantilever is secured to the frame, and a mirror is installed at the tip section of the cantilever. Apair of electrodes are secured on the platform. And by supplying voltage between the electrode and cantilever and generating an electrostatic force between them, the mirror is vertically moved.

## Description

### Technical Field

The present invention relates to an optical switch used for optical communication and optical measurement.

### Background Art

Recently communication technology is dramatically changing the world as symbolized in the so called IT revolution. In this situation, communication capacities are increasing dramatically and information communication network technology supporting this is progressing remarkably. Thus far communication capacities have been increased by the introduction of optical fibers, but a further increase in communication capacities is becoming difficult even if more optical fibers are introduced. In such a situation, technologies related to wavelength multiplex transmission and total optical networks are the subject of research and development worldwide.

Optical switches are receiving attention as one of the key devices to increase communication capacities. As wavelength multiplexing advances, the information volume to be processed is expected to increase dramatically. In a conventional information communication network, optical signals are converted into electric signals, the electric signals are switched, and the electric signals are converted into optical signals again, so signal transmission speed drops at the electric signal part. Due to such a reason, an optical switch, which allows the direct switching of optical signals, is receiving attention.

In the future, as communication networks become complicated, the use of an enormous number of optical switches in communication networks is anticipated. Therefore downsizing and integration is desired for optical switches.

As a result, the development of optical switches using micro-machine technology is in active progress recently. For example, Robustness and Reliability of Micromachined Scanning Mirrors, Proc. of MOEMS '99, pp. 120 - 125, 1999 (hereafter referred to as Document 1) states that the mirror createdby surface micro-machining is stood on the substrate using an electrostatic actuator, which is created simultaneously, and is used. Also Micromachines for Wavelength Multiplexed Telecommunications, Proc. of MOEMS '99, pp. 126 - 131, 1999 (hereafter referred to as Document 2) states of a system where the mirror created by the surface micro-machine technology is not stood on the substrate, but is tilted by several degrees on the substrate so as to change the reflection direction of light.

### Disclosure of the Invention

It is an object of the present invention to provide an optical switch for which downsizing and integration can be attempted.

An optical switch according to one aspect of the present invention comprises a base element having an optical path; a cantilever which is supported by the base element; a mirror which is installed on the cantilever for blocking light which propagates on the optical path; and drive means for moving the mirror up and down between a first position where light propagating on the optical path is transmitted and a second position where light propagating on the optical path is blocked, the mirror being arranged to be above the base element when the mirror is at the first position, and the mirror being arranged to be positioned at an upper surface part of the base element when the mirror is at the second position.

With such an optical switch, if the drive means is activated when the optical switch is in free (initial) status when the mirror is at the first position, for example, the mirror descends while elastically deforming the cantilever against the urging force and reaches the second position. By verticallymoving the mirror in a direction perpendicular to the top face of the base element, the space in the horizontal direction becomes smaller compared with the case of moving the mirror in the horizontal direction (direction parallel to the top face of the base element). By this, the optical switch can be downsized and integrated. When the mirror is at the secondposition, themirror is positionedby fitting with the top face section of the base element, for example, so the orientation of the mirror is maintained in a status where reflectance is good.

It is preferable that the drivemeans further comprises an electrode provided on the base element, and means for generating an electrostatic force between the electrode and the cantilever. By this, the drive means can be implemented with a simple and compact configuration.

In this case, a spacer, for maintaining the gap between the electrode and cantilever when the mirror is at the second position, is created on the electrode. By this, the gap between the cantilever and the electrode can be constant when the mirror is at the second position. When the gap between the cantilever and the electrode is small, the spacer prevents the cantilever from contacting the electrode.

It is preferable that the optical switch further comprises position maintaining means for maintaining the mirror at the first position or the second position. This makes it unnecessary to continue supplying electric signals between the electrode and cantilever, so power consumption can be minimized. This is also effective in the case of a power failure.

In this case, it is preferable that the mirror is made of a magnetic substance, the electrode made of a permanent magnet, and the position maintaining means is means for maintaining the mirror at the second position by the magnetic force generated between the mirror and the electrode. By this, the mirror can be selfmaintained at the second position with a simple configuration.

It is also acceptable that the mirror is made of a permanent magnet, the electrode is made of a magnetic substance, and the position maintaining means is means for maintaining the mirror at the second position by the magnetic force generated between the mirror and the electrode. In this case as well, the mirror can be self maintained at the second position with a simple configuration.

It is also preferable that the optical switch further comprises an electro-magnet for clearing the maintaining of the position of the mirror by the position maintaining means. By this, compared with the case of clearing the maintaining of the position of the mirror using only electrostatic force, the voltage value, to be supplied between the electrode and the cantilever, can be decreased when the maintaining position of the mirror is cleared, and power can be saved.

It is preferable that the mirror is created by integrating it with the cantilever using x-ray lithography and electro-forming. By this, the flatness of the mirror reflection face improves and the mirror reflection face becomes smooth, so the reflectance of the mirror is increased.

It is also preferable that the mirror is coated on the surface thereof with a film of gold, silver or aluminum. By this, a mirror with high reflectance with respect to light in a wavelength band for optical communication, such as infrared light, can be obtained.

It is also preferable that the optical switch further comprises a silicon structure which is created above the base element so as to sandwich the cantilever, characterized in that the cantilever, the mirror and the silicon structure constitute the switch element. In this case, sealing is secured by the silicon structure, so the cantilever and the mirror can be protected from dust and moisture.

In this case, it is preferable that the cantilever with a mirror is created on the surface of the silicon structure, and the switch element is created by etching the silicon structure using fluorine gas. This prevents a status where moisture remains attached to the surface of the cantilever after etching is over, so the strength and durability of the cantilever increases.

It is also preferable that a mask provided with a mask pattern section for creating the switch element is created on the surface of the silicon wafer such that the mask pattern section has a slanted angle with respect to the orientation flat of the silicon wafer, then the cantilever with a mirror is created on the surface of the silicon wafer, and the switch element is created by etching the silicon wafer from the surface side using an etchant.

To position the mirror above the base element when the mirror is at the first position, a concave section for arching the cantilever must be created in the silicon structure by etching the silicon in the depth direction and in the side direction when the switch element is manufactured. If an isotropic etchant represented by HF + HNO₃ is used here, flexibility in selecting material is decreased since an isotropic etchant melts most metals. In the case of an anisotropic etchant, on the other hand, the choice of materials increases, but if the mask is formed on the surface of the silicon wafer such that the mask pattern section of the mask has an angle in a direction parallel to or vertical with respect to the orientation flat of the silicon wafer, then etching for the side direction becomes etching in a direction which corresponds to the (111) plane of the crystal orientation for which etching is difficult. Therefore in some cases only etching in the depth direction progresses, and etching on the side does not progress. So by creating the mask on the surface of the silicon wafer such that the mask pattern section has an angle in the oblique direction with respect to the orientation flat of the silicon wafer, as described above, etching on the side becomes etching in a direction which includes the (111) plane and planes other than this. As a result, etching on the side progresses even if an anisotropic etchant is used. As a consequence, silicon under the cantilever can be efficiently etched using an inexpensive etchant, and the cantilever can be arched.

In this case, it is preferable that the etchant is tetrametylammonium hydroxide. By this, when nickel, whereby stress control is easy, is used for the material of the cantilever and mirror, the silicon under the cantilever can be etched without melting the cantilever and mirror.

It is also preferable that an insulation layer is formed on the top face of the electrode, and the cantilever is supported by the base element so that the cantilever is capable of abutting on and separating from the insulation layer. By this, the part which includes the cantilever and mirror and the base element which includes the electrode can be created simultaneously, and the number of components required for manufacture can be decreased.

An optical switch according to another aspect of the present invention comprises a base element having a plurality of first normal-use optical paths, a plurality of second normal-use optical paths which are disposed facing each one of the first normal-use optical paths and at least one backup optical path; a plurality of movable mirrors which are supported by the base element and reflect light from the first normal-use optical paths or the backup optical path in a horizontal direction; and drive means for moving each one of the movable mirrors up and down.

In such an optical switch, the movable mirror is positioned above the base element, and light emitted from the first normal-use optical paths is entered into the second normal-use optical paths directly during normal operation, for example. When the backup optical path is used, the movable mirror is lowered, and light emitted from the first normal-use optical paths is reflected by the movable mirror, and is entered to the backup optical path. By driving the movable mirror vertically in this way, the pitch between channels in each normal-use optical path can be decreased. This makes downsizing and the integration of the optical switch possible.

In this case, the optical path length between the movable mirror and the backup optical path can be decreased when a spatial propagation type optical switch is created, so beam divergence canbe suppressed. This allows a decrease of insertion loss of light to the optical path. Also the optical path length difference between each movable mirror and backup optical path is decreased, so dispersion of insertion loss of light between each channel can be decreased.

It is preferable that the optical switch further comprises a plurality of collimator lenses for optically coupling the first normal-use optical path and the second normal-use optical path, and optically coupling the first normal-use optical path and the backup optical path. In this case, a high performance spatial propagation type optical switch can be constructed simply.

It is also preferable that the backup optical path is constructed so as to extend in the vertical or oblique direction with respect to each one of the first normal-use optical paths. By this configuration, light emitted from the first normal-use optical paths can be reflected by the movable mirror and be directly entered to the backup optical ' path. In this case, there is one mirror, so light loss due to reflection can be minimized.

The backup optical path may be constructed so as to extend in parallel with each one of the first normal-use optical paths, and a fixed mirror may be disposed on the base element for reflecting the light reflected by the movable mirror or the light from the backup optical path in the horizontal direction. By this configuration, the light emitted from the first normal-use optical paths can be reflected by the movable mirror, and the reflected light can be further reflected by the fixed mirror and entered to the backup optical path. In this case, the plurality of second normal-use optical paths and the backup optical path can be created using a same one optical fiber tape conductor; and mechanical strength can be increased, which is an advantage.
It is also preferable that the drive means comprises a plurality of cantilevers cantilever-supported by the base element and each having the movable mirror fixed thereto; a plurality of electrodes which are disposed on the top face of the base element so as to face each one of the cantilevers; and means for generating an electrostatic force between the cantilever and the electrode. In this case, the drive means can be implemented with a simple configuration.

An optical switch for protection according to the present invention is characterized in that the above mentioned optical switch is applied. This can implement a downsized and integrated optical switch for protection.

### Brief Description of the Drawings

Fig. 1 is a horizontal cross-sectional view depicting an optical switch according to the first embodiment of the present invention;
Fig. 2 is a vertical cross-sectional view depicting a status where the mirror shown in Fig. 1 is at a position to transmit light;
Fig. 3 is a vertical cross-sectional view depicting a status where the mirror shown in Fig. 1 is at a position to block light;
Fig. 4 is a cross-sectional viewdepicting the arranged location of the cantilever and electrode shown in Fig. 2;
Fig. 5A - Fig. 5G are diagrams depicting an example of the manufacturing process of the switch element shown in Fig. 2;
Fig. 6A - Fig. 6H are diagrams depicting another example of the manufacturing process of the switch element shown in Fig. 2;
Fig. 7 is a horizontal cross-sectional view depicting the optical switch according to the second embodiment of the present invention;
Fig. 8 is a vertical cross-sectional view depicting the optical switch according to the third embodiment of the present invention;
Fig. 9A - Fig. 9C are diagrams depicting an example of the manufacturing process of the spacer for maintaining a gap shown in Fig. 8;
Fig. 10A and Fig. 10B are diagrams depicting another example of the manufacturing process of the spacer for maintaining a gap shown in Fig. 8;
Fig. 11 is a vertical cross-sectional view depicting a variant form of the optical switch according to the third embodiment of the present invention;
Fig. 12 is a plan view depicting the spacer for maintaining a gap shown in Fig. 11;
Fig. 13 is a vertical cross-sectional view depicting the optical switch according to the fourth embodiment of the present invention;
Fig. 14 is a vertical cross-sectional view depicting the optical switch according to the fifth embodiment of the present invention;
Fig. 15 is a plan view depicting the switch element shown in Fig. 14;
Fig. 16A - Fig. 16F are diagrams depicting an example of the manufacturing process of the switch element shown in Fig. 14;
Fig. 17 is a diagram depicting the status where the hard mask is formed on the surface of the silicon wafer in the manufacturing process of the switch element shown in Fig. 14;
Fig. 18 is a diagram depicting a general example of the status where the hard mask is formed on the surface of the silicon wafer;
Fig. 19 is a diagram depicting the status where the silicon wafer on which the hard mask is formed shown in Fig. 18 is wet-etched;
Fig. 20 is a plan view depicting the optical switch according to the sixth embodiment of the present invention;
Fig. 21A and Fig. 21B are vertical cross-sectional views depicting the status where the mirror shown in Fig. 20 is at the position to transmit light and the position to block light;
Fig. 22 is ahorizontal cross-sectional view depicting an embodiment of the optical switch according to the seventh embodiment of the present invention;
Fig. 23 is a II - II cross-sectional view of Figs. 21;
Fig. 24 is a III - III cross-sectional view of Figs. 21;
Fig. 25 is a cross-sectional view depicting the status where the optical switch shown in Fig. 23 is in normal use;
Fig. 26A - Fig. 26G are diagrams depicting an example of the manufacturing process of the switch element shown in Fig. 23 and Fig. 24;
Fig. 27 is a horizontal cross-sectional view depicting the status where the optical switch shown in Figs. 21 is housed in a package;
Fig. 28 is a vertical cross-sectional view depicting the status where the optical switch shown in Figs. 21 is housed in a package;
Fig. 29 is ahorizontal cross-sectional view depicting the optical switch according to the eighth embodiment of the present invention; and
Fig. 30 is ahorizontal cross-sectional view depicting the optical switch according to the ninth embodiment of the present invention.

### Best Modes for Carrying Out the Invention

Embodiments of the present invention will now be described with reference to the accompanying drawings.

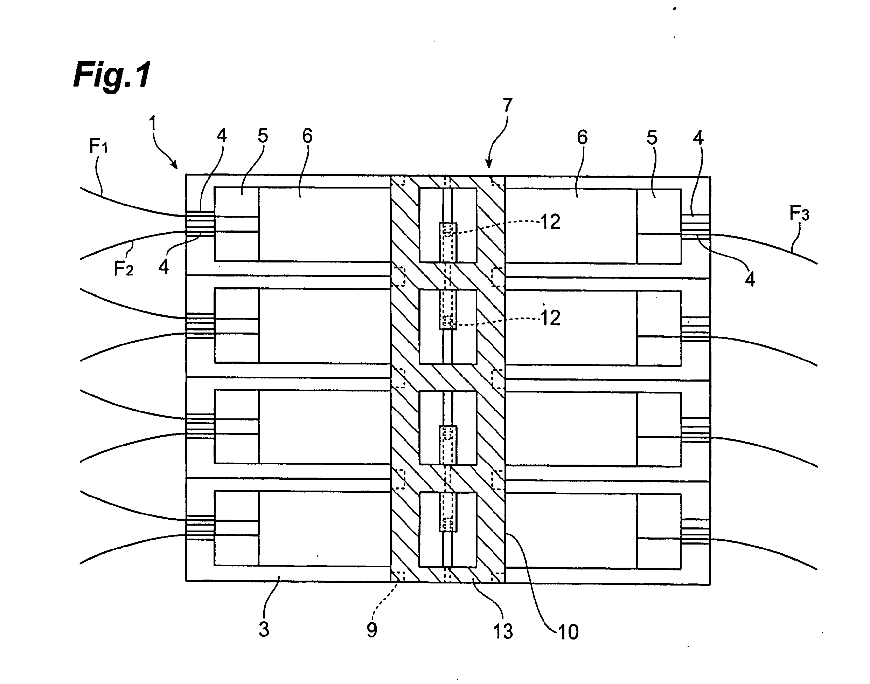

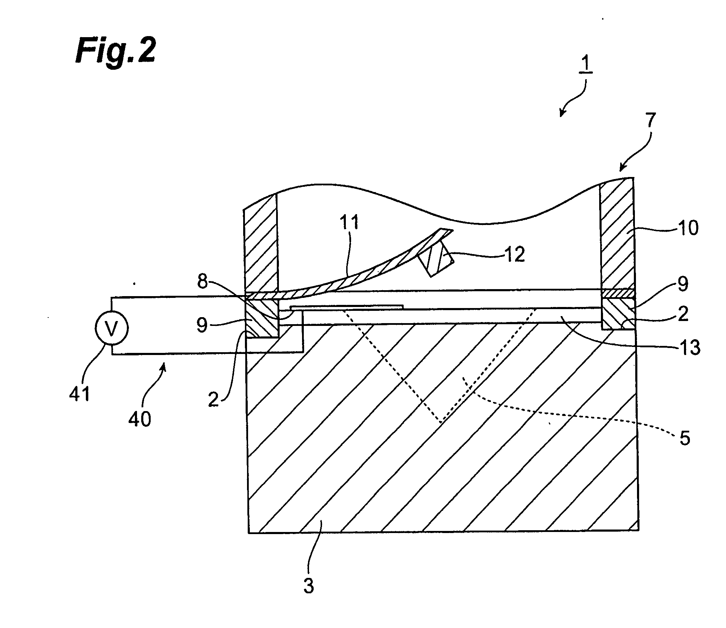

Fig. 1 is a horizontal cross-sectional view depicting an optical switch according to the first embodiment of the present invention, and Fig. 2 is a vertical cross-sectional view of a part of the optical switch. In these drawings, the optical switch 1 of the present embodiment is a plurality of 1 × 2 switches which are arrayed, and have a platform (base element) 3 which is made of silicon, for example. On both edges of the top face of the platform 3, two V grooves for securing optical fiber 4 are created, respectively, for each set of 1 × 2 switches. In the V groove for securing optical fiber 4 at one end, the optical fibers F1 and F2 are held and secured, and in the V groove for securing optical fiber 4 at the other end, the optical fiber F3 is held and ' secured. The optical fibers F1, F2 and F3 constitute a part of the optical path.

The optical switch 1 of the present embodiment is a 1 × 2 switch, but a 2 × 2 switch may be constructed by also holding an optical fiber in the remaining V groove for securing optical fiber 4.

A pair of V grooves for securing lens 5 are created inside the V groove for securing optical fiber 4 on the top face of the platform 3, and a Selfoc lens 6 is positioned in each V groove for securing lens 5. Between the two V grooves for securing lens 5 on the top face of the platform 3, the mirror insertion groove 13 for inserting the later mentioned mirror 12 is created, and this mirror insertion groove 13 extends in the array direction of each 1 × 2 switch. In addition to the V groove for securing optical fiber 4 and the V groove for securing lens 5, a groove for positioning and bonding an alignment pin, which is used for alignment with other optical components, may be created depending on the application.

The switch element 7 is placed and secured on this platform 3. The switch element 7 has a frame 10 made of silicon, and a plurality of alignment pins 9 for aligning the platform 3 and the switch element 7 are created on the bottom face of the frame 10. Each alignment pin 9 is inserted into the hole for a securing socket 2 created on the platform 3.

On the frame 10, a cantilever 11 comprising a plate spring, for example, is cantilever-supported so as to extend in the longitudinal direction of the mirror insertion groove 13. By this, the cantilever 11 is sandwiched between the platform 3 and the frame 10. Here the cantilever 11 is preferablymade of metal, such as nickel (Ni) , whereby stress control is easy, so as to not be easily destroyed. The material of the cantilever 11 is not limited to nickel, but material where such metal as tungsten and tantalum is spattered, or silicon material such as silicon oxide and silicon nitride, can be used.

At the tip of the cantilever 11, a mirror 12 is created so as to protrude downward. This mirror 12 is made. of a permanent magnet. The mirror 12 is created by electro-forming Co, Ni, Mn or P and magnetizing it.

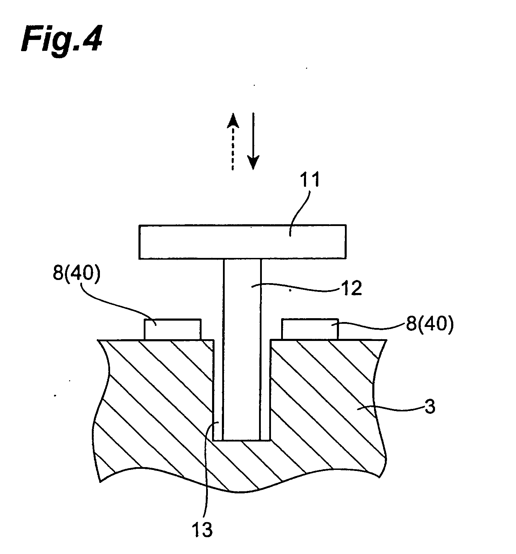

This mirror 12 is constructed so as to be moved vertically by the drive section 40. The drive section 40 is comprised of a pair of electrodes 8 which are disposed on the top face of the platform 3 facing each other, sandwiching the mirror insertion groove 13 (see Fig. 4), and a voltage source 41 which supplies voltage between the electrodes 8 and the cantilever 11, and generates an electrostatic force between them. The electrode 8 is made from a magnetic substance. The electrode 8 is created by patterning a conductive film by photolithography, and then performing permalloy-plating,for example. Another method ' is creating a magnetic substance film of nickel or permalloy by sputtering, and then creating an electrode pattern by photolithography and etching.

In the optical switch 1 constructed as above, the cantilever 11 is arched upward with respect to the platform 3, and the mirror 12 is at a position above the platform 3 (first position) in the free status shown in Fig. 2. In such a status, the light emitted from the optical fiber F1 transmits through the switch element 7 and enters the optical fiber F3.

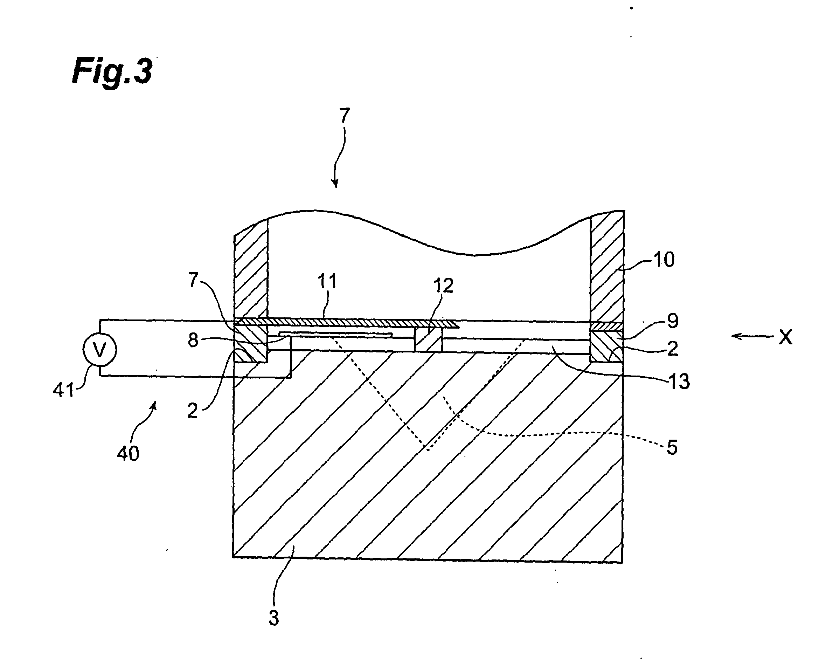

When a predetermined voltage is applied between the pair of electrodes 8 and the cantilever 11 from the voltage source 41 in this free status, electrostatic force is generated between them, the cantilever 11 deforms elastically against the urging force, and approaches the electrode 8. Along with this, the mirror 12 also descends and reaches the second position where it contacts the bottom section of the mirror insertion groove 13. Fig. 3 is a diagram depicting the status where the mirror 12 is at the second position, and Fig. 4 is a cross-sectional view of Fig. 3, viewed from the arrow X side. At this time, the reflection face of the mirror 12 is vertical with respect to the top face of the platform 3. In this status, the light emitted from the optical fiber F1 is reflected by the mirror 12, and is directed to the optical fiber F2.

Here the mirror 12 is made of a permanent magnet, and the electrode 8 is made of a magnetic substance, so when the cantilever 11 approaches the electrode 8, magnetic force acts between the cantilever 11 and the electrode 8, and the cantilever 11 is attracted to the electrode 8. By this, the mirror 12 is maintained at the second position shown in Fig. 3 and Fig. 4. Therefore it is unnecessary to continue supplyingvoltagebetweenthe cantilever 11 and the electrode 8, and voltage consumption can be suppressed. Also even if a power failure occurs, the mirror 12 can be maintained at the second position with certainty.

To return the mirror 12 from the second position to the first position shown in Fig. 2, an electrostatic force in the reverse direction is generated between the electrode 8 and the cantilever 11 by the voltage source 41. Then the cantilever 11 moves away from the electrode 8, and the optical switch becomes free status.

In this way, the electrode 8 is disposed on the platform 3, the mirror 12 is secured to the cantilever 11, and the mirror 12 is vertically moved with respect to the platform 3 by the electrostatic force, so the space taken in the horizontal direction for driving the mirror 12 is minimal. This allows downsizingand integrationof the optical switch, and an optical switch array appropriate for large scale integration can be implemented.

When the mirror 12 is at the secondposition, themirror 12 contacts the bottom section of the mirror insertion groove 13 and is positioned, so the mirror 12 is maintained to be more accurately vertical with respect to the top face of the platform 3, and the light emitted from the optical fiber F1 is reflected at high efficiency.

For reference, the optical switch can be constructed such that the mirror 12 contacts the bottom section of the mirror insertion groove 13 if 40V of voltage is applied between the electrode 8 and the cantilever 11 when the space between the electrode 8 and the cantilever 11 is 10 µm. This is a relatively low voltage value.

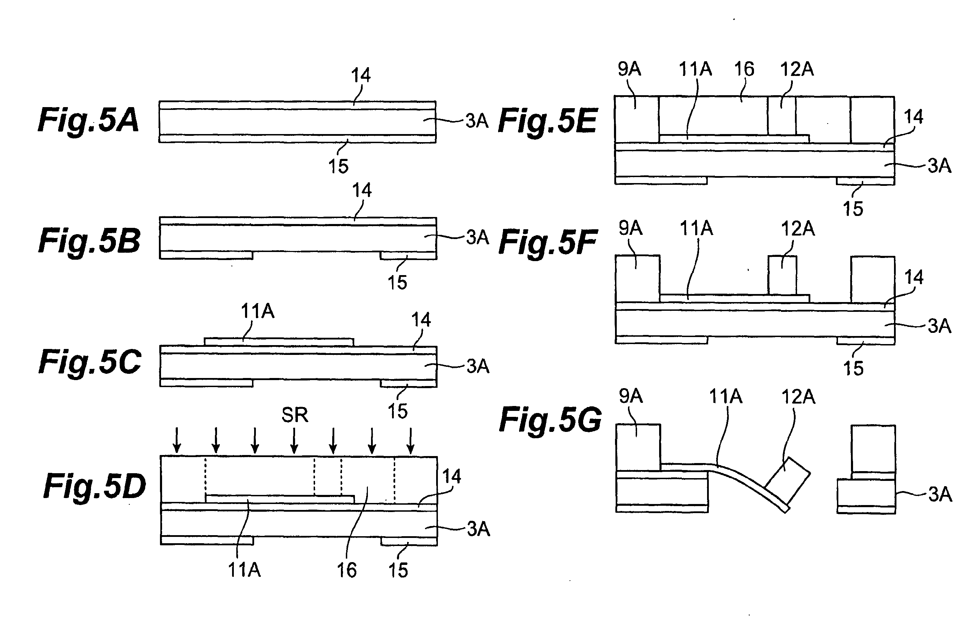

Fig. 5 is an example of the manufacturing process of this switch element 7. At first, a silicon substrate 3A is prepared and a conductive film, such as a titanium film 14 where the titanium has been sputtered, is formed on the surface of the silicon substrate 3A. On the rear face of the silicon substrate 3A, a film 15 made of a material which does not dissolve (e.g. silicon nitride) is formed by sputtering when silicon etching is performed (see Fig. 5A) .

Then the silicon nitride film 15 on the rear face is patterned by photolithography and etching (see Fig. 5B). This becomes a mask when the last silicon etching is performed.

Then the cantilever 11A made of nickel is created on the titanium film 14 by photolithography and plating (see Fig. 5C). The cantilever 11A is plated or covered with a film so that compressive stress is applied. By this, the cantilever 11A, which is arched downward from the top face of the silicon substrate 3A, is formed when the silicon substrate 3A is etched in a later process (see Fig. 5G).

Then the titanium film 14 is coated with resist 16 for SR (Synchrotron Radiation) lithography and SR lithography is performed (see Fig. 5D). For SR, a 1 - 3 angstrom wavelength is mainly used. This belongs to an area called soft x-rays, and exposure without the influence of diffraction is possible even for a pattern of several micrometers in size, since the wavelength is short. Soft x-rays have good transmittance, so exposure through a resist film 16 with a thickness of several hundred micrometers is possible, and it also has good linearity, so a vertical resist structure can be formed on the substrate 3A.

Then Co, Ni, Mn or P are electro-formed to create the mirror 12A and the alignment pin 9A (see Fig. 5E). The thickness of the resist 16 is 110 µm, for example, height is adjusted by polishing after plating, and the height of the mirror 12A and the height of the alignment pin 9A are both 100 µm, for example.

By using x-ray lithography and electro-forming for creation of the mirror 12A in this way, the vertical degree of the mirror face with respect to the substrate 3A increases, and the surface roughness decreases, so a mirror with high reflectance can be created.

Then Co, Ni, Mn or P, created by electro-forming, is magnetized, and then the resist 16 is removed (see Fig. 5F). And the titanium film 14 is dissolved by wet etching, and finally the silicon substrate 3Ais anisotropic-etched using KOH (potassium hydroxide) or TMAH (tetramethylammonium hydroxide) to create the frame. By this, the tip side of the cantilever 11A arches downward for 200 µm, for example, with respect to the alignment pin 9A (see fig. 5G).

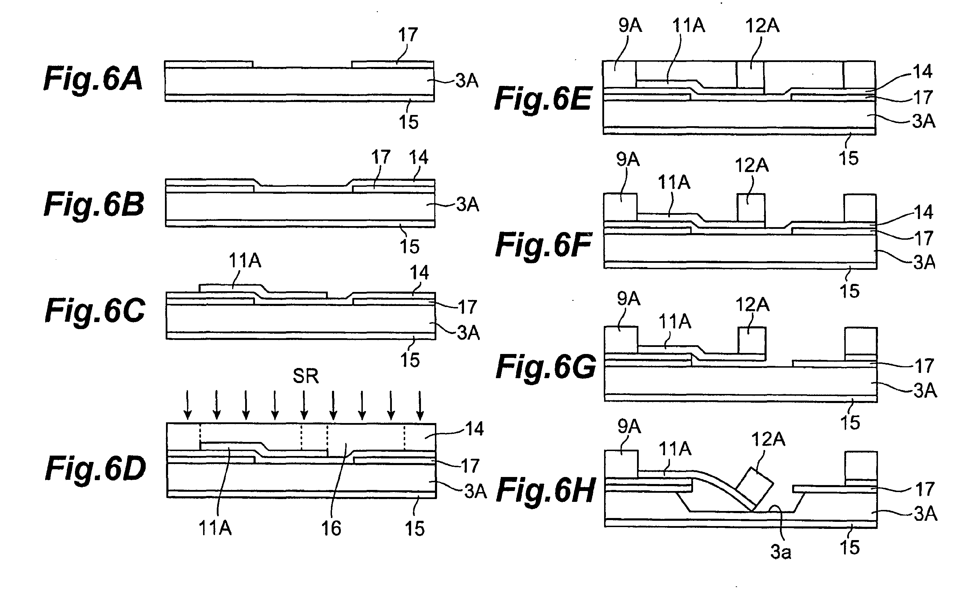

Figs. 6 show anothermethod of manufacturing the switch element 7. The switch element 7 created by this process has a silicon substrate which has a concave section for aching the cantilever 11, instead of the frame 10.

Tomanufacture this switch element 7, a silicon nitride film 15 is formed on the rear face of the silicon substrate 3A, just like Fig. 5, and the silicon oxide film 17, to be an etching mask, is formed on the surface of the substrate 3A (see Fig. 6A). And titanium is sputtered on the surface of the silicon substrate 3A to form the titanium film 14 (see Fig. 6B). Then the cantilever 11A is created on the titanium film 14 by photolithography and plating (see Fig. 6C) . Then a process the same as Fig. 5D - Fig. 5F is executed (see Fig. 6D - Fig. 6F).

Then the titanium film 14 is dissolved by wet etching (see Fig. 6G). Then isotropic dry etching is performed on the silicon substrate 3A from the front face side using fluorine gas, such as XeF₂, to create the concave section 3a (see Fig. 6H). By this, the tip side of the cantilever 11A is inserted into the concave section 3a, and the cantilever 11A, which arches downward from the top face of the silicon substrate 3A, is created. In this case, controllability for the amount of arching of the cantilever 11A becomes better than the case of etching the silicon substrate from the rear face. Also if this dry etching is used, moisture does not remain attached to the surface of the cantilever 11A after etching is completed, so the strength and durability of the cantilever 11A increases.

In the switch element 7 created as above, the mirror 12A and the alignment pin 9A are created by lithography using a same mask, so the relative position accuracy is very high. The space between the cantilever 11 and the electrode 8 is also controlled at high accuracy.

The platform 3 is manufactured as follows. At first, the hole for securing socket 2, the V groove for securing optical fiber 4, and the V groove for securing a lens 5 are created using conventional dicing technology. The accuracy of these is 1 µm or less, for example. For manufacturing the V groove for optical fiber 4 and the V groove for securing lens 5, anisotropic etching of silicon may be used. And a pair of electrodes 8 are created by sputtering on the top face of the platform 3 at a position sandwiching the mirror insertion groove 13.

By constructing the optical switch 1 by combining the switch element 7 and the platform 3, an optical switch with high design flexibility can be obtained.

In the present embodiment, the electrode 8 is made of a magnetic substance and the mirror 12 is made of a permanent magnet, but the electrode 8 may be made of a permanent magnet and the mirror 12 of a magnetic substance. In this case, for the electrode 8, such a permanent magnet as Nd-Fe-B is sputtered to form a film, and is patterned by photolithography and etching, or sputtering is performed by a method called "lift off" after photolithography is performed. The electrode 8 may be created by plating the above mentioned Co, Ni, Mn or P. The mirror 12 is manufactured by permalloy electro-forming, for example.

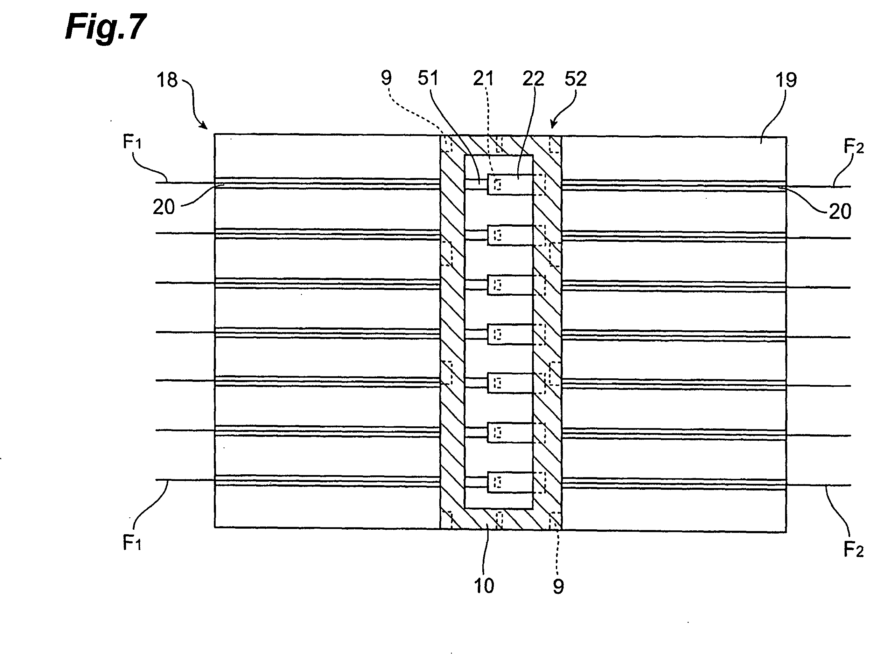

Fig. 7 is a horizontal cross-sectional view depicting the optical switch according to the second embodiment of the present invention. In Fig. 7, identical or similar composing elements as the first embodiment are denoted with the same reference numerals, for which descriptions are omitted.

In Fig. 7, the optical switch 18 of the present embodiment is apluralityof 1 × 1 switches (ON/OFF switches) , which are arrayed. The optical switch 18 includes the platform 19. One V groove for securing optical fiber 20 is formed for each set of 1 × 1 switches at both ends on the top face of this platform 19, and the optical fibers F1 and F2 are held and secured in each V groove for securing optical fiber 20. The mirror insertion groove 51, where the later mentionedmirror 21 is inserted, is created between the two V grooves for securing optical fiber 20 to the platform 19, and this mirror insertion groove 51 extends in the longitudinal direction of the V grooves for securing optical fiber 20.

The switch element 52 is positioned on such a platform 19. This switch element 52 has a frame 10, which is similar to that of the switch element 7 of the first embodiment, and a plurality of alignment pins 9, which are created on the bottom face of the frame 10, are secured to the platform 19. On the frame 10, the cantilever 22 is cantilever-supported so as to extend in the longitudinal direction of the mirror insertion groove 51, and the mirror 21 is installed at the tip section of the cantilever 22. On the top face of the platform 19, a pair of electrodes are arranged facing each other sandwiching the mirror insertion groove 51, although this is not illustrated.

In such an optical switch 18, the cantilever 22 arches upward with respect to the platform 19, and the mirror 21 is positioned above the platform 19 (first position) in a free status. In this status, light emitted from the optical fiber F1 transmits through the switch element 52 and enters the optical fiber F2. If a predetermined voltage is applied between the cantilever 22 and the electrode (not illustrated) in this free status, electrostatic force is generatedbetween them, and the mirror 21 descends and reaches the second position where the mirror 21 contacts the bottom section of the mirror insertion groove 51. At this time, the reflection face of the mirror 21 is vertical with respect to the top face of the platform 19. In this status, light emitted from the optical fiber F1 is blocked or reflected by the mirror 21.

Since the mirror insertion groove 51 and the cantilever 22 are constructed so as to extend in the longitudinal direction of the V groove for securing optical fiber 20, pitch can be decreased when 1 × 1 switches are arranged in an array.

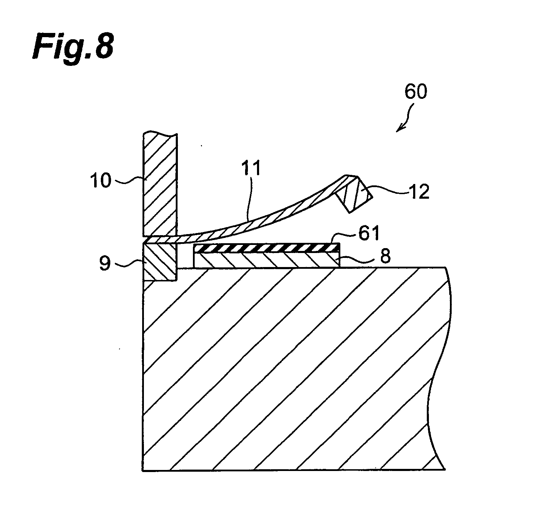

Fig. 8 is a vertical cross-sectional view depicting the optical switch according to the third embodiment of the present invention. In Fig. 8, identical or similar composing elements as the first embodiment are denoted with the same reference numerals, for which descriptions are omitted.

In Fig. 8, the optical switch 60 of the present embodiment is an optical switch where a spacer for maintaining the gap 61 is created on the electrode 8 according to the first embodiment. This spacer 61 is for maintaining the gap between the cantilever 11 and the electrode 8 when the mirror 12 is at a position to reflect light (second position).

As for the material of the spacer 61, it is preferable to use a ferro-electric substance such as PZT (lead zirconate titanate), PLZT (lead lanthanum zirconate titanate) and barium titanate, and an insulation material where electro-charges do not accumulate verymuch, such as alumina, zirconia, polyethylene and polyimide. If a ferro-electric substance is used, the drive voltage can be decreased, and if an insulation material where electric charges do not accumulate much is used, an unexpected drive (operation) can be prevented.

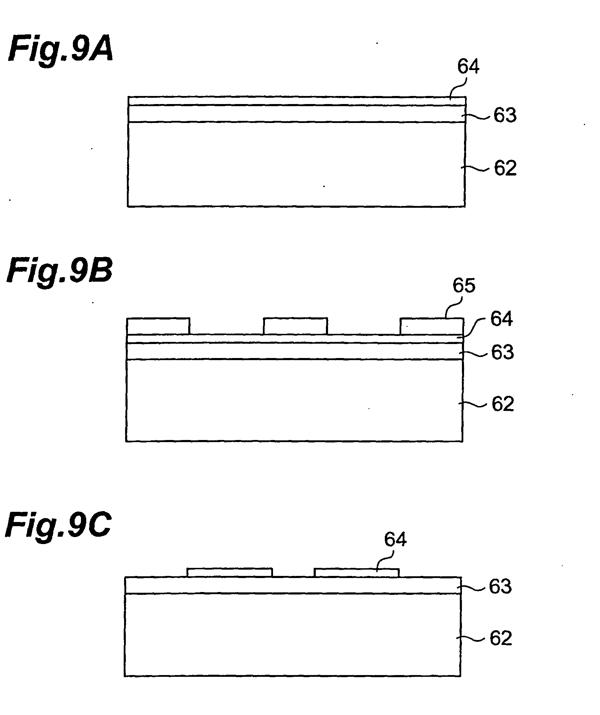

Figs. 9 show an example of the manufacturing process of the spacer for maintaining the gap 61. At first, the silicon substrate 62 is prepared, a film 63 for creating the electrode is formed on this silicon substrate 62 by sputtering, and a film 64 for creating the spacer is formed on this film 63 by sputtering (see Fig. 9A). Then the resist pattern 65 is created on the film 64 by photolithography (see Fig. 9B). Then the film 64 is etched using the resist pattern 65 as a mask (see Fig. 9C). By this, the spacer 64 is created on the electrode 63.

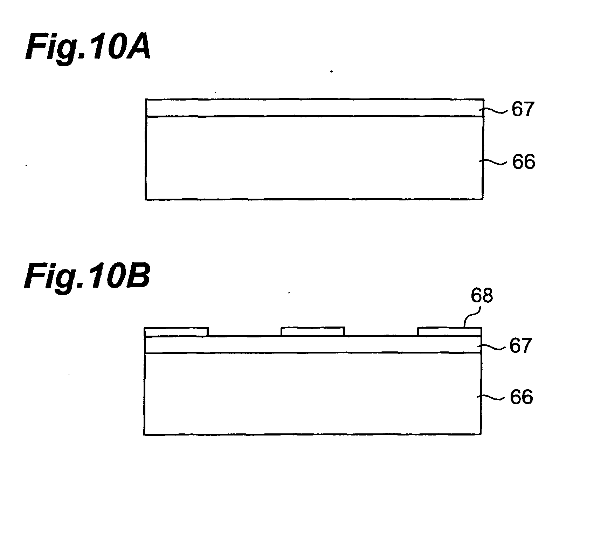

Figs. 10 show other manufacturing process of the spacer for maintaining the gap 61. At first, the silicon substrate 66 is prepared, and a film 67 for creating the electrode is formed on this silicon substrate 66 by sputtering (see Fig. 10A). Then the resist pattern 68 for creating the spacer is created on the film 67 by photolithography (see Fig. 10B) . In other words, the photo resist itself is used as the spacer. By this, the spacer 68 is created on the electrode 67.

In this optical switch 60, the cantilever 11 is arched upward away from the spacer 61 when the mirror 12 is in free status, where light on the optical path transmits through (firstposition) (see Fig. 8) , and the cantilever 11 contacts the spacer 61 when the mirror 12 is at the second position, where light on the optical path is blocked. By this, when the mirror 12 is at the second position, the gap between the cantilever 11 and the electrode 8 is maintained to be constant. When the gap between the cantilever 11 and the electrode 8 is small, this structure prevents the cantilever 11 from contacting the electrode 8.

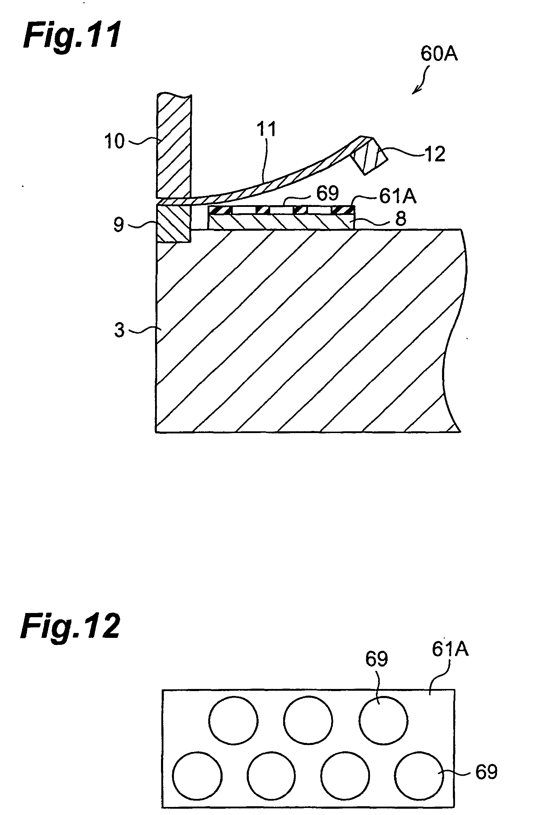

Fig. 11 shows a variant form of the third embodiment. As Fig. 11 shows, according to the optical switch 60A of the present embodiment, the spacer for maintaining the gap 61A, which has a different structure than the second embodiment, is created on the electrode 8. A plurality of circular holes 69 are formed on the spacer 61A, as shown in Fig. 12, and the spacer 61A is constructed so as to cover a part of the electrode 8. For such a spacer which covers a part of the electrode 8, a mesh type structure may be used.

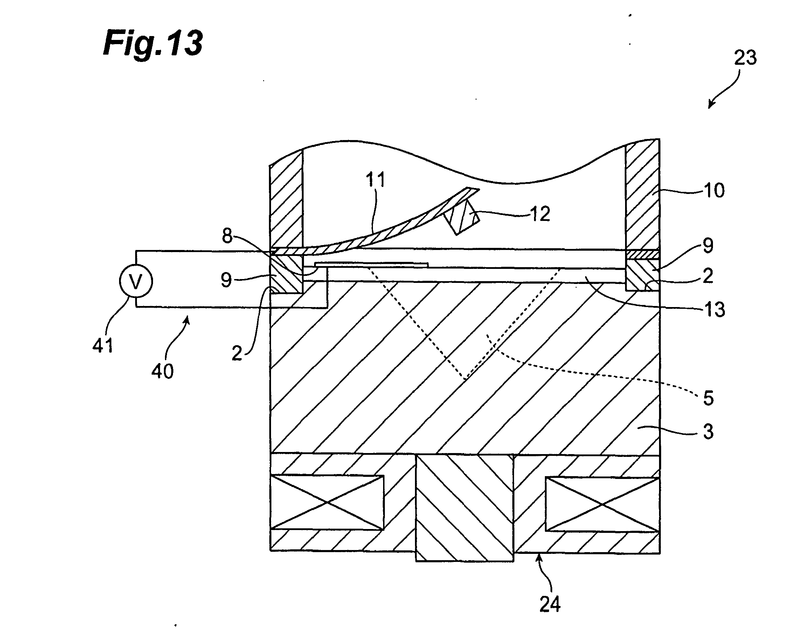

Fig. 13 is a vertical cross-sectional view depicting the optical switch according to the fourth embodiment of the present invention. In Fig. 13, identical or similar composing elements as the first embodiment are denoted with the same reference numerals, for which descriptions are omitted.

As Fig. 13 shows, the optical switch 23 of the present embodiment has an electro-magnet 24 for releasing the position retention of the mirror 12 on the bottom face of the platform 3 of the first embodiment. If a current signal is supplied to the coil of the electro-magnet 24 when the cantilever 11 is at a position where light is reflected (second position) so that a magnetic force greater than the attraction between the cantilever 11 and the electrode 8 is generated, the position retention of the mirror 12 which is self-maintained at the second position is cleared, and the cantilever 11 returns to the free status shown in Fig. 13. By this, the voltage value to be supplied between the electrode 8 and the cantilever 11 can be decreased, compared to the case of clearing the position retention of the mirror 12 only using electrostatic force, and power can be saved.

Here the electro-magnet 24 is disposed under the platform 3, but the electro-magnet 24 may be attached to the top of the frame 10.

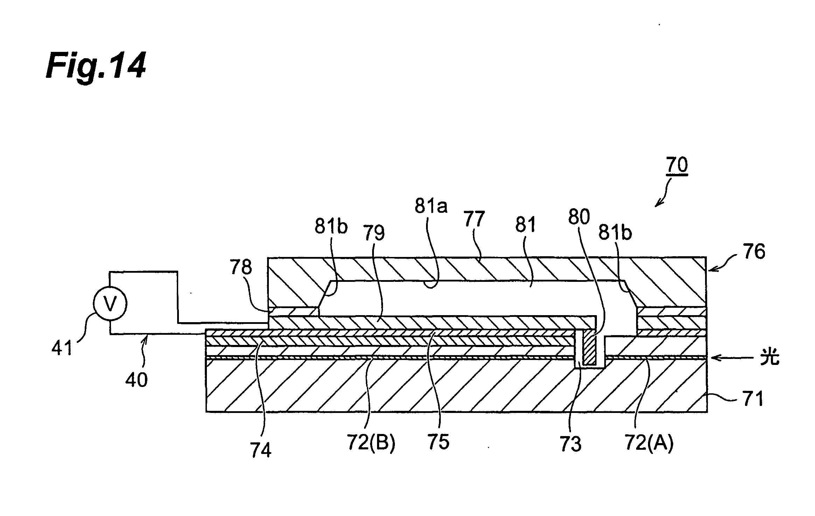

Fig. 14 is a vertical cross-sectional view depicting an optical switch according to the fifth embodiment of the present invention. In Fig. 14, identical or similar composing elements as the first embodiment are denoted with the same reference numerals, for which descriptions are omitted.

In Fig. 14, the optical switch 70 according to the present embodiment is a plurality of 1 × 1 switches which are arrayed. The optical switch 70 has a platform 71 which is made of silicon, for example, and a core 72 as the optical path is disposed on this platform 71. On the top face of the platform 71, the mirror insertion groove 73, which extends in a vertical direction with respect to the direction in which the core 72 extends, is formed, and the core 72 is separated by the mirror insertion groove 73, creating the optical paths A and B. Also on the top face of the platform 71, a plurality of electrodes 74, which are arrayed in a direction where the mirror insertion groove 73 extends, are created, and the spacer for maintaining the gap 75 is created on the electrode 74.

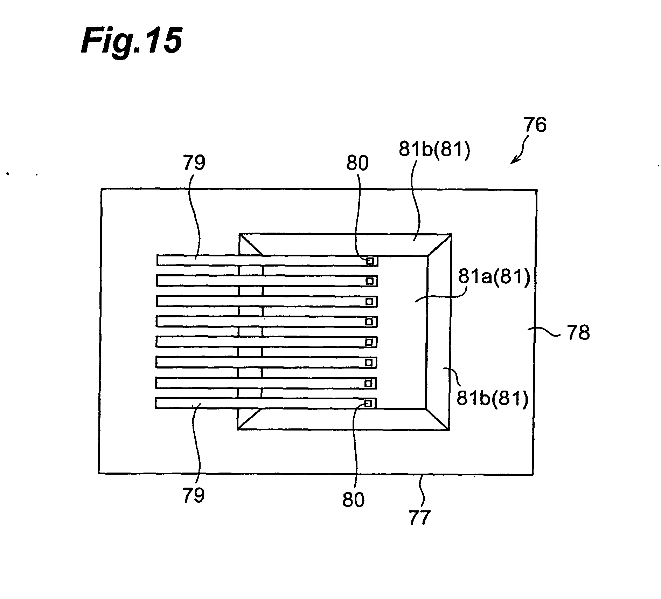

On the spacer 75, the switch element 76 is placed and secured. The switch element 76 has a silicon substrate 77, and the cantilever 79 is disposed on the surface (bottom face) of this silicon substrate 77 via the insulation layer 78, such as SiO₂. There are a plurality of cantilevers 79, as shown in Fig. 15, and these cantilevers 79 are arrayed so as to face each electrode 74 on the platform 71. And the base side of each cantilever 79 is bonded to the spacer 75.

The mirror 80 is installed at the tip section of each cantilever 79, and light which transmits through the optical path A is blocked by this mirror 80 when it is inserted into the mirror insertion groove 73. The reflection film, made of metal which has high reflectance to the light with a wavelength in an infrared area used for optical communication, is applied on the surface of the mirror 80 by plating or sputtering. The reflection film is made of gold, silver or aluminum, for example. By creating such a reflection film on the surface of the mirror 80, the absorptivity of light by the mirror 80 decreases, so light loss at reflection can be decreased.

The concave section 81, for arching the cantilever 79 upward in the free status where the mirror 80 is at a position to transmit through the light propagating on the optical pathA, is created on the silicon substrate 77. This concave section 81 is created by the later mentioned isotropic etching, and has a rectangular bottom face 81a and four tapered side faces 81b. By making the structure for arching the cantilever 79 upward not an open structure but a concave section 81, high sealability is assured, and adhesion of dust and moisture on the cantilever 79 and the mirror 80 can be prevented. By this, activation of the cantilever 79 is not negatively influenced.

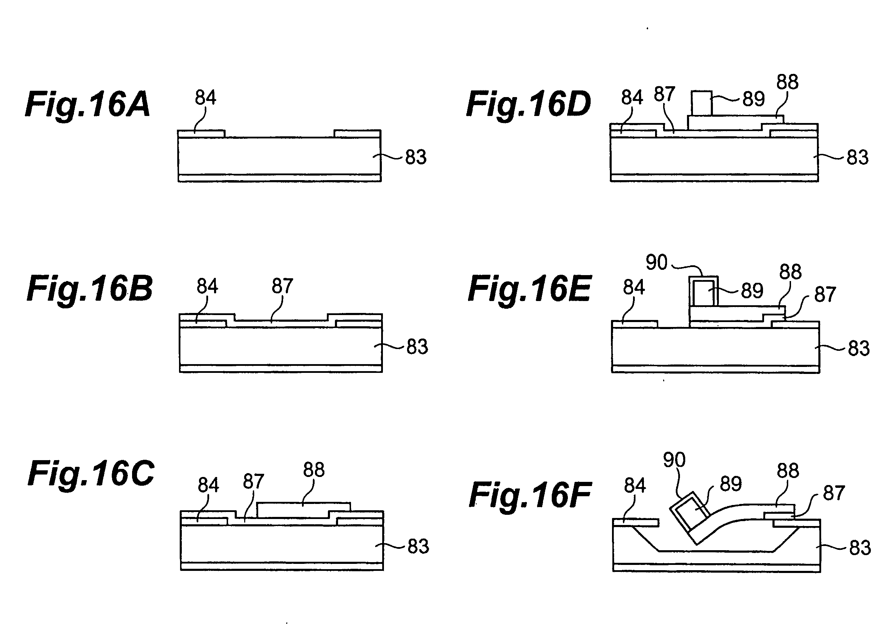

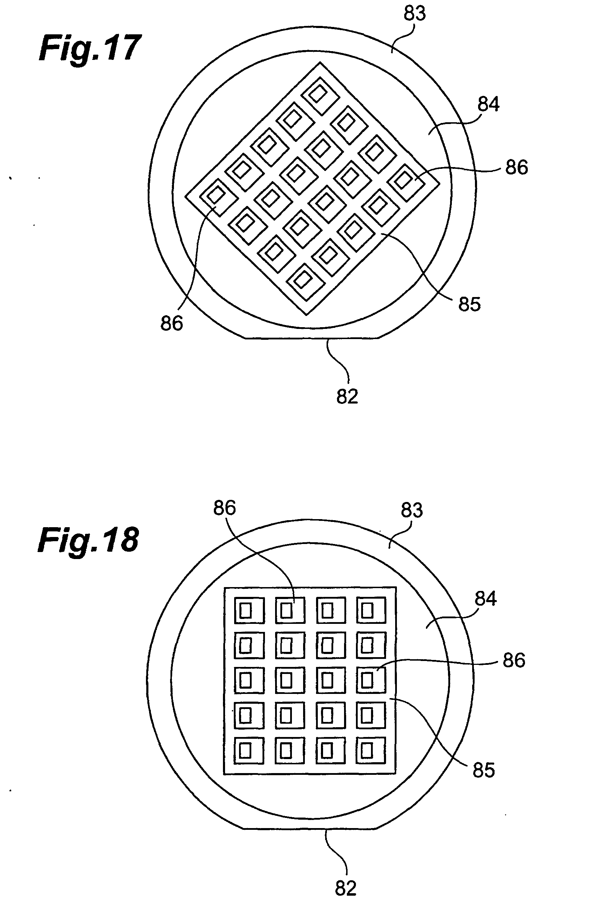

Figs. 16 show an example of the manufacturing process of this switch element 76. At first, a silicon wafer 83 having the orientation flat 82 shown in Fig. 17 is prepared. For the silicon wafer 83, a 1 mm thick 3 inch type, for example, is used.

And the hard mask 84 for the last silicon etching is created on the surface of the silicon wafer 83 by photolithographyandetching (see Fig. 16A). This hardmask 84 is made of SiO₂. The hard mask 84 also has a rectangular mask pattern section 85 for creating a plurality of switch elements 76, as shown in Fig. 17. In this mask pattern section 85, a plurality of switch creation patterns 86, corresponding to each switch element 76, are created in a matrix.

This hardmask 84 is formed on the surface of the silicon wafer 83 such that the mask pattern section 85 has a slanted angle, preferably 45°, with respect to the orientation flat 82. In other words, the hard mask 84 is formed on the surface of the silicon wafer 83 such that the vertical and horizontal array directions of the switch creation pattern 86 of the mask pattern section 85 have a slanted angle with respect to the orientation flat 82.

Then the titanium conductive film 87 is formed on the surface of the silicon wafer 83 (see Fig. 16B). Then the cantilever 88 made of nickel is created on the conductive film 87 by photolithography and plating (see Fig. 16C) . Then the mirror 89 made of nickel is created on the cantilever 88 by SR lithography and plating (see Fig. 16D). Then the reflection film 90 made of gold, silver or aluminum is formed on the surface of the mirror 89 by plating or sputtering. Also the titanium conductive film 87, which exists in an area other than under the cantilever 88, is wet-etched (see Fig. 16E).

Then the silicon wafer 83 is wet-etched from the front surface side, and the titanium conductive film 87 under the cantilever 88 is wet-etched (see Fig. 16F). Here in the etching of the silicon wafer 83, it is preferable to use TMAH (tetrametylammonium hydroxide) as the etchant, so that the cantilever 88 made of nickel and the titanium conductive film 87 do not dissolve. And the silicon wafer 83 is etched for about 120 - 400 µm in the depth direction at an etchant temperature of about 70°C and a 25 - 30 µm/h etching rate. For the etching of the conductive film 87, a mixed solution of H₂O₂ and NH₄OH (mixing ratio 1:1) is used as the etchant. And the 1 µm thick conductive film 87 is etched at a 0.1 - 0.4 µm/min etching rate while keeping the temperature of the etchant at room temperature.

After this etching ends, cleaning processing is performed, and a drying processing using a freeze drying method or critical point drying method is performed. By this, adhering of the cantilever 88 to the silicon wafer 83 can be prevented.

Here silicon etching is performed using TMAH to prevent the fusion of nickel and titanium, but an anisotropic etchant other than TMAH, such as KOH and NaOH or an isotropic etchant, may be used if the cantilever 88 and the mirror 89 do not dissolve.

For the crystal orientation of the silicon wafer, the silicon wafer has a (100) plane of the surface, a (110) plane of orientation flat, and a (111) plane which is 54° with respect to the surface. Generally the (100) plane can be easily etched, but the (111) plane is difficult to be etched. To etch the silicon wafer 83 under the cantilever 88 in the present embodiment, on the other hand, isotropic etching is required where etching is performed not only in the depth direction but also in the side direction.

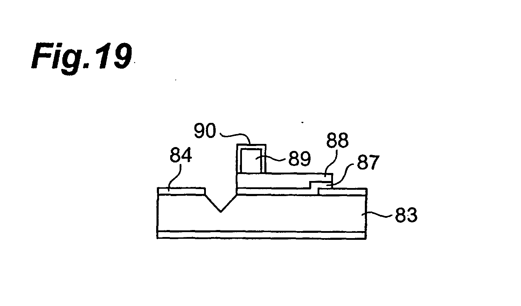

To create the hardmask 84 on the surface of the silicon wafer 83, generally the mask pattern section 85 has vertical and horizontal angles with respect to the orientation flat 82, that is, the vertical and horizontal array directions of the switch creation pattern 86 in the mask pattern section 85 have vertical and horizontal angles with respect to the orientation flat 82, as shown in Fig. 18. In this case, isotropic etching is difficult in the abovementioned etching step of the silicon wafer 83 using TMAH. Specifically, etching to a side becomes etching in a direction where the (111) planes, for which etching is difficult to progress, are neatly arranged. Therefore etching to a side progresses little compared with the etching in the depth direction corresponding to the (100) planes, as shown in Fig. 19, and the silicon 83 under the cantilever 88 is not etched, and as a result the cantilever 88 cannot be arched.

According to the present embodiment, however, the hard mask 84 is formed on the surface of the silicon wafer 83 so that the mask pattern section 85 has a slanted angle with respect to the orientation flat 82, so etching to a side becomes etching in a direction which is inclined with respect to the (111) plane. In other words, in this case, etching is performed in a direction which includes the (111) plane and the plane which is not the (111) plane, so etching to the side progresses on the plane which is not the (111) plane. By this, the silicon 83 under the cantilever 88 is etched with certainty, as shown in Fig. 16F, so the tip side of the cantilever 88 can be arched.

Therefore the silicon 83 under the cantilever 88 can be etched without fusing the cantilever 88 and the mirror 89 without using an expensive dry etching. As a result, cost can be decreased and the etching time shortened.

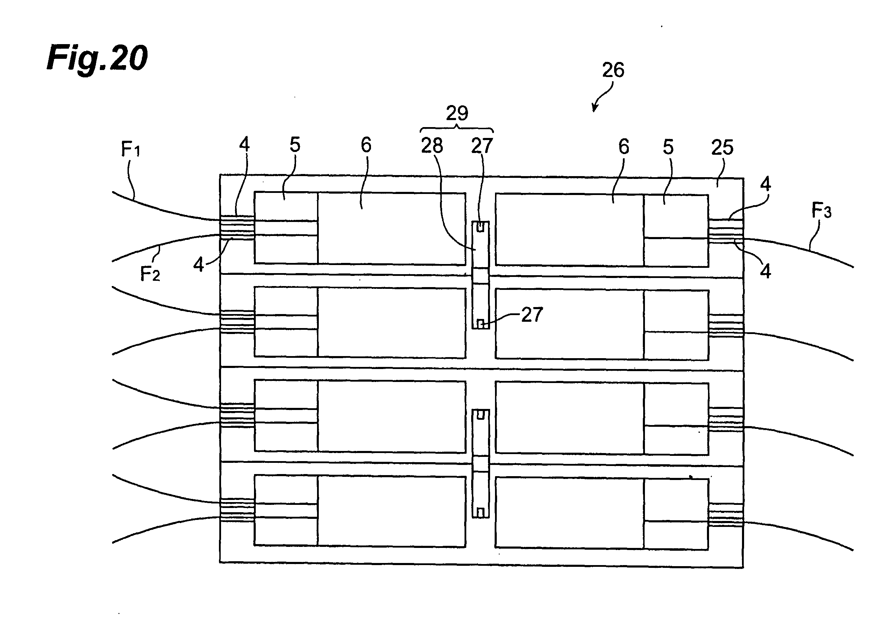

Fig. 20 is a plan view depicting the optical switch according to the sixth embodiment of the present invention. In Fig. 20, identical or similar composing elements as the first embodiment are denotedwith the same reference numerals, for which descriptions are omitted.

In Fig. 20, the optical switch 26 of the present embodiment comprises the platform 25, and the V groove for securing optical fiber 4 and the V groove for securing lens 5 are created on the top face of the platform 25, just like the first embodiment. The optical fibers F1 - F3 are secured in the V groove for securing optical fiber 4, and the Selfoc lens 6 is secured in the V groove for securing lens 5.

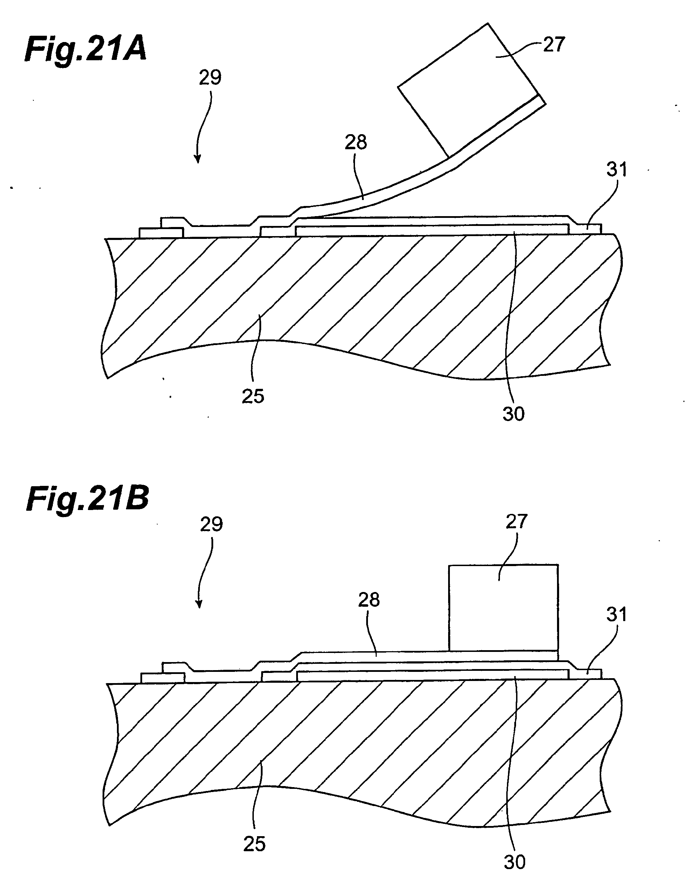

The switch element 29 is created on the top face of the platform 25 at a section between the two V grooves for securing lens 5. As Figs. 21 show, the switch element 29 comprises an electrode 30 which is secured on the platform 25, and the insulation layer 31 is formed on the top face of this electrode 30. For this insulation layer 31, silicon nitride, silicon oxide film or such a resin thin film as parelyn can be used.

On the top face of the platform 25, the cantilever 28 is cantilever-supported, and this cantilever 28 is constructed such that the cantilever 28 can contact to or separate from the insulation layer 31 by the voltage source, which is not illustrated. At the tip section of the cantilever 28, the mirror 27 is installed so as to protrude upward.

In such an optical switch 26, the cantilever 28 is arched upward from the platform 25, and the mirror 27 is above the platform 25 in free status, as shown in Fig. 21A. If a predetermined voltage is applied between the cantilever 28 and the electrode 30 by the voltage source (not illustrated) in this status, an electrostatic force is generated between them, and the cantilever 28 approaches the electrode 30, and the mirror 27 descends accordingly. And the mirror 27 is positioned and held by the cantilever 28 contacting the insulation layer 31, as shown in Fig. 21B.

In such an optical switch 26, the switch element 29 and the platform 25 can be manufactured in a same manufacturing process. By this, the number of components required for manufacturing can be decreased, and the manufacturing burden can be decreased.

In the present embodiment, if the electrode 30 is created by a film of permanent magnet which has conductivity, and at least one of the mirror 27 and the cantilever 28 is created by such a magnetic substance as permalloy, then the position of the mirror 27 is secured, even if voltage is cutoff. The electrode 30 may be a magnetic substance, and at least one of the mirror 27 and the cantilever 28 may be a permanent magnet.

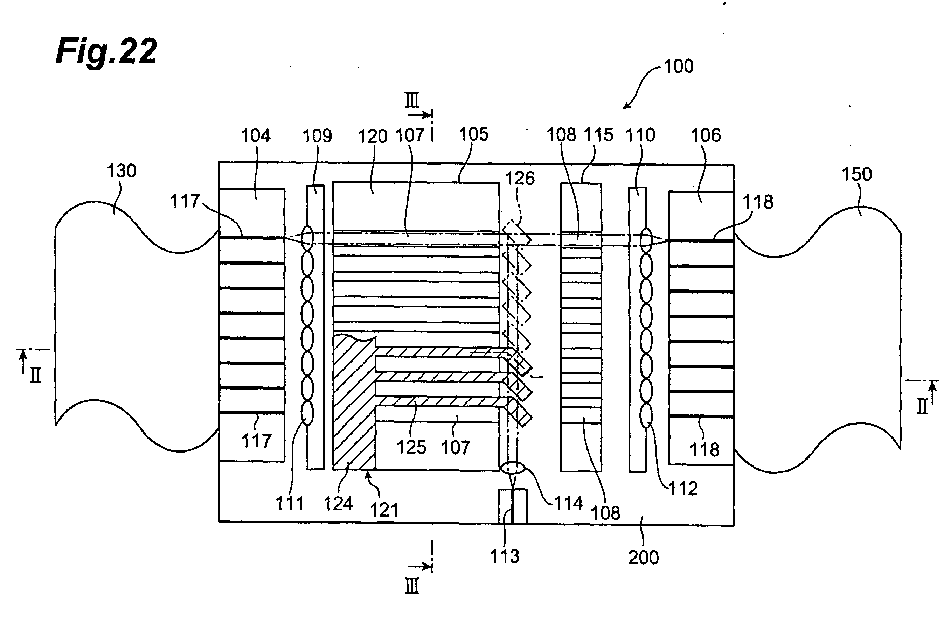

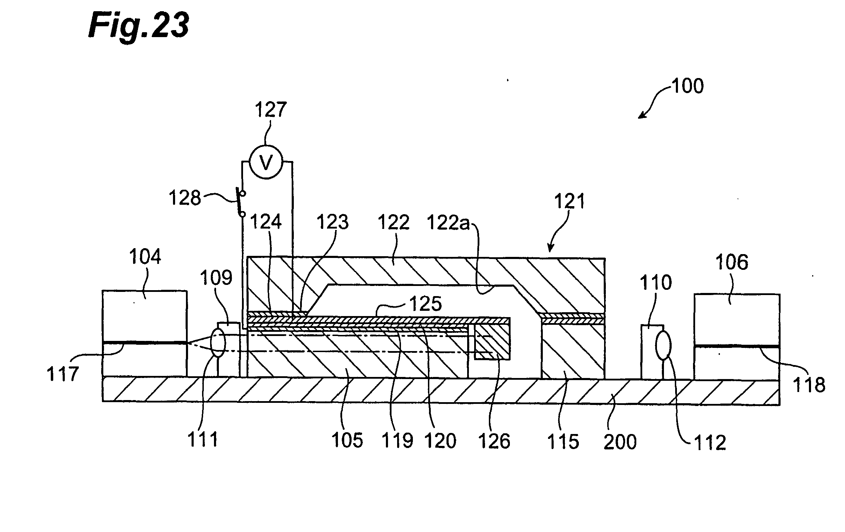

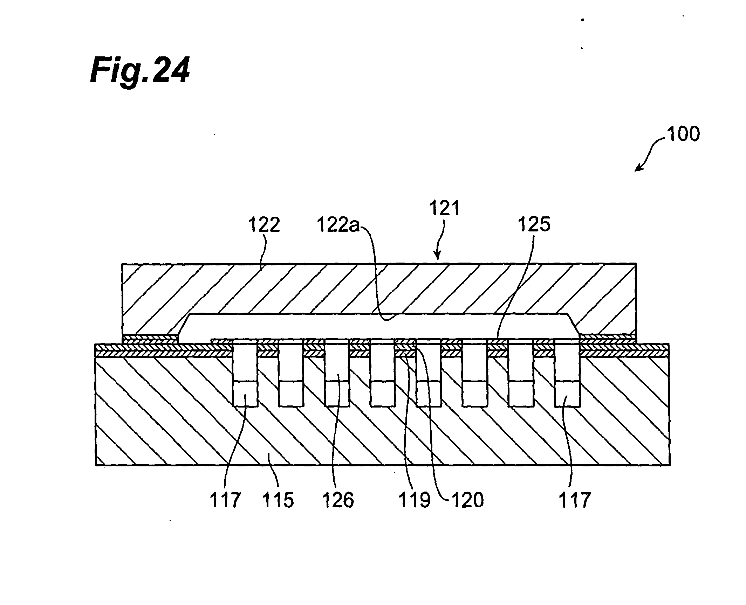

Fig. 22 is ahorizontal cross-sectional view depicting the seventh embodiment of the optical switch according to the present invention, Fig. 23 is a II - II cross-sectional view of Fig. 22, and Fig. 24 is III - III cross-sectional view of Fig. 22. In Fig. 22 - Fig. 24, the optical switch 100 of the present invention is an optical switch for protection, which is comprised of eight pairs of normal-use optical paths and one backup optical path.

The optical switch 100 has a platform 200, and the optical fiber array 104, which is connected to the tape fiber 130, is disposed at one end of this platform 200, and the optical fiber array 106, which is connected to the tape fiber 150, is disposed at the other end of the platform 200.

The optical fiber array 104 maintains the eight optical fibers 117 which are exposed from the tape fiber 130 to be in parallel with each other, and these optical fibers 117 constitute the first normal-use optical path. The optical fiber array 106 maintains the eight optical fibers 117, which are exposed from the tape fiber 150 to be parallel with each other so as to face each optical fiber 117, and these optical fibers 118 constitute the second normal-use optical path. The array pitch of the optical fibers 117 and 118 is 0.25 mm, for example.

Between the optical fiber arrays 104 and 106, the collimator lens arrays 109 and 110 are disposed facing each other. The collimator lens arrays 109 and 110 have eight collimator lenses 111 and 112 respectively for optically coupling the optical filters 117 and 118. These collimator lenses 111 and 112 are lenses which can create light which has about a 100 - 150 µm collimate diameter, for example. These lenses may all be the same or may be different, depending on the difference of the optical path.

One optical fiber 113, which constitutes the backup optical path, is disposed at one side of the platform 200, so as to extend vertically to the core of the optical fibers 117 and 118. The collimator lens 114, for optically coupling the optical fiber 113 to the optical fiber 117, is disposed on the platform 200. This collimator lens 114 has the same structure as the collimator lenses 111 and 112.

The main base substrate 105 and the auxiliary base substrate 115 are also disposed on the platform 200, so as to sandwich the collimator lens 114. These base substrates 105 and 115 are made of Si or glass, for example.

Eight groove sections 107, which extend in the direction of the cores of the optical fibers 117 and 118, are created on the main base substrate 105, and eight groove sections 108, corresponding to each groove section 107, are created on the auxiliary base substrate 115. These groove sections 107 and 108 are created to spatially propagate light between the collimator lenses 111 and 112. The width of the groove sections 107 and 108 is, needless to say, a dimension larger than the collimate diameter of the light.

Aplurality of elongated electrodes 119, which extend along the groove section 107, are created on the top face of the main base substrate 105, and this electrode 119 is made of such metal as Ni, Ti, Cr, Au/Cr and Au/Ti. The insulation layer 120, which is comprised of SiO₂, Si₃N₄, resin, TaO₂ or a ferroelectricmaterial, is created on each electrode 119.

The platform 200, optical fiber arrays 104 and 106, collimator lens arrays 109 and 110, main base substrate 105 and auxiliary base substrate 115 constitute the base element of the optical switch 100.

The switch element 121 is placed and secured on the top of the main base substrate 105 and the auxiliary base substrate 115. The switch element 121 has a switch substrate 122, which is made of Si, for example. On the surface (bottom face) of the switch substrate 122, the conductive structure 124, which is made of Ni, Cu, an Ni alloy or a Cu alloy, is created via the insulation layer 123 made of SiO₂. In this conductive structure 124, eight cantilevers 125 have been integrated, and the cantilevers 125 extend to the position which protrude from the main base substrate 105 so as to face the electrode 119.

The mirror 126, for horizontally reflecting the light from the optical fiber 117 to the optical fiber 118, is secured at the tip section of each cantilever 125. This mirror 126 is created so as to incline 45° with respect to the cores of the optical fibers 117 and 118, and by this, light from the optical fiber 117 reflects vertically to the optical fiber 113. The mirror 126 is made of the same metal as the conductive structure 124 and the cantilever 125, and has stable light reflectance by coating Au, Al or Ag on the mirror surface by sputtering or plating. The mirror 126 is positioned in a space between the main base substrate 105 and auxiliarybase substrate 115, so unlike a structure where a mirror housing groove is created on the optical guide, cross talk when light propagates rarely occurs.

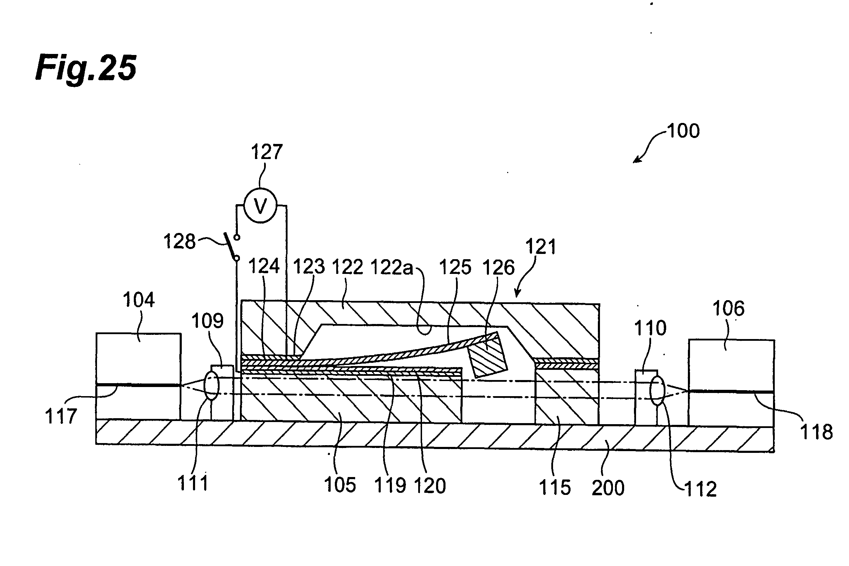

In this switch element 121, the conductive structure 124 is secured on the top face of the main base substrate 105 and the auxiliary base substrate 115. On the switch substrate 122, the concave section 122a for arching the cantilever 125 upward is disposed (see Fig. 25). By this, the mirror 126 can be vertically moved.

The conductive structure 124 and each electrode 119 are connected via the voltage source 127 and electric switch 128. And an electrostatic force (electrostatic attraction) is generated between the cantilever 125 and electrode 119 by applying a predetermined voltage between the conductive structure 124 and electrode 119 using the voltage supply 127, so as to vertically move the mirror 126. There are a plurality of (8) electric switches 128 so as to drive each mirror 126 individually.

The electrode 119, conductive structure 124, cantilever 125, voltage source 127 and the electric switches 128 constitute the drive means for vertically moving each mirror 126.

Here the electric switch 128 is normally in OFF status, as shown in Fig. 25, and all the cantilevers 125 arch upward with the conductive structure 124 as a fulcrum. Therefore the mirror 126 is maintained at an up position (first position). In this status, light emitted from each optical fiber 117 of the optical fiber array 104 spatially propagates through the groove section 107 of the main base substrate 105 and the groove section 108 of the auxiliary base substrate 115 via the collimator lens 111, and is entered to the corresponding optical fiber 118 of the optical fiber array 106 via the collimator lens 112.

When the electric switch 128 is turned ON, a predetermined voltage is applied between the cantilever 125 and the electrode 119 by the voltage supply 127, the cantilever 125 is attracted to the electrode 119 by the electrostatic force generated between the cantilever 125 and the electrode 119, the mirror 126 descends, as shown in Fig. 23, and is maintained at the down position (second position). At this time, the insulation layer 120 exists between the cantilever 125 and the electrode 119, so the cantilever 125 never contacts the electrode 119. In this status, the light emitted from the optical fiber 117 of the optical fiber array 104 spatially propagates through the groove section 107 of the main base substrate 105 via the collimator lens 111, and is reflected in the vertical direction by the mirror 126. And this reflected light spatially propagates between the main base substrate 105 and the auxiliary base substrate 115, and is entered to the optical fiber 113 via the collimator lens 114.

Here the main base substrate 105 and the auxiliary base substrate 115 are created on the platform 200, but the auxiliary base substrate 115 does not have to be created if the main base substrate 105 alone can sufficiently support the switch element 121.

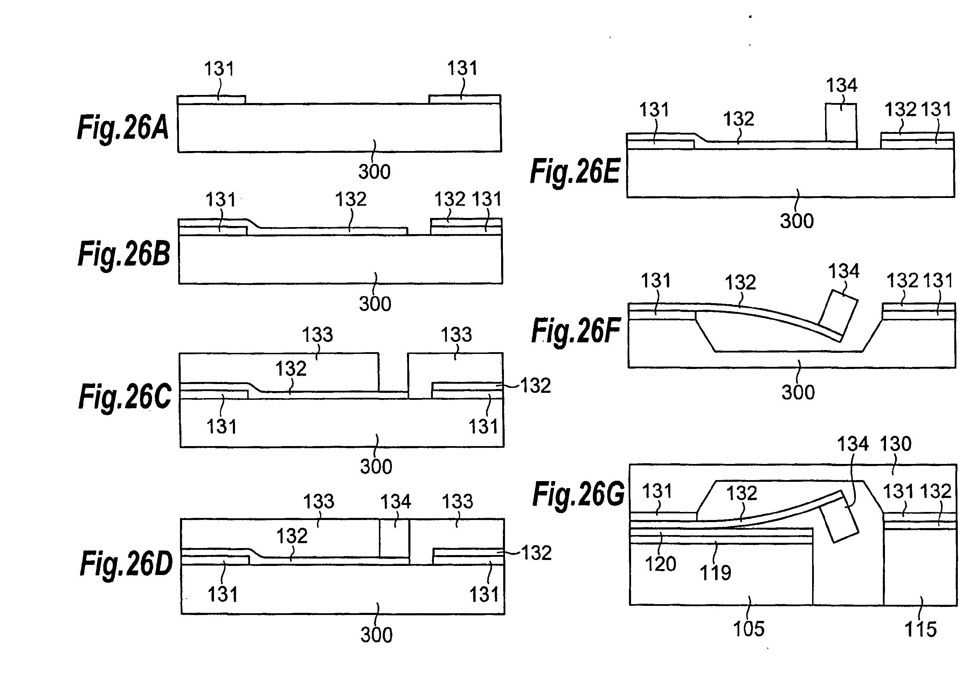

Figs. 26 show an example of the manufacturing process of the switch element 121. In Figs. 26, the Si substrate 300 is prepared, and the thermal oxide film (SiO₂ film) 131 is patterned in a part of the surface of the Si substrate 300 (Fig. 26A). Then the cantilever 132 is created on the Si substrate 300 and the thermal oxide film 131 by photolithography and Ni plating (Fig. 26B). Thentheresist 133 is formed on the cantilever 132 by SR (Synchrotron Radiation) lithography (Fig. 26C). Then the mirror section 134 is created on the cantilever 132 by Ni plating (Fig. 26D). Then the resist 133 on the cantilever 132 is stripped (Fig. 26E). Then the mirror is coated on its face with Au, Al or Ag by sputtering or plating. Then the lower side portion of the cantilever 132 in the Si substrate 300 is etched (Fig. 26F). By this, the above mentioned switch element 121 is created. And the switch element 121 is turned upside down, and is installed to the separatelymanufactured main base substrate 105 and auxiliary base substrate 115 (Fig. 26G).

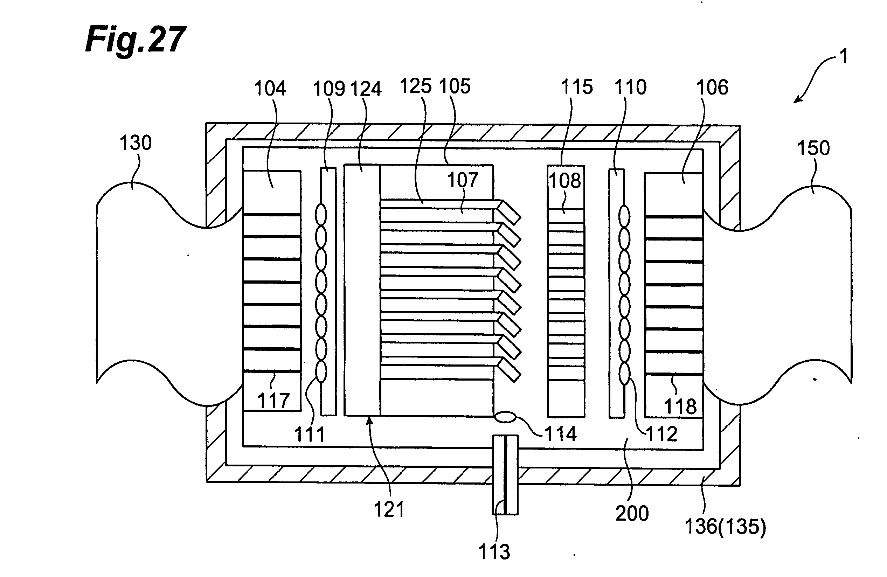

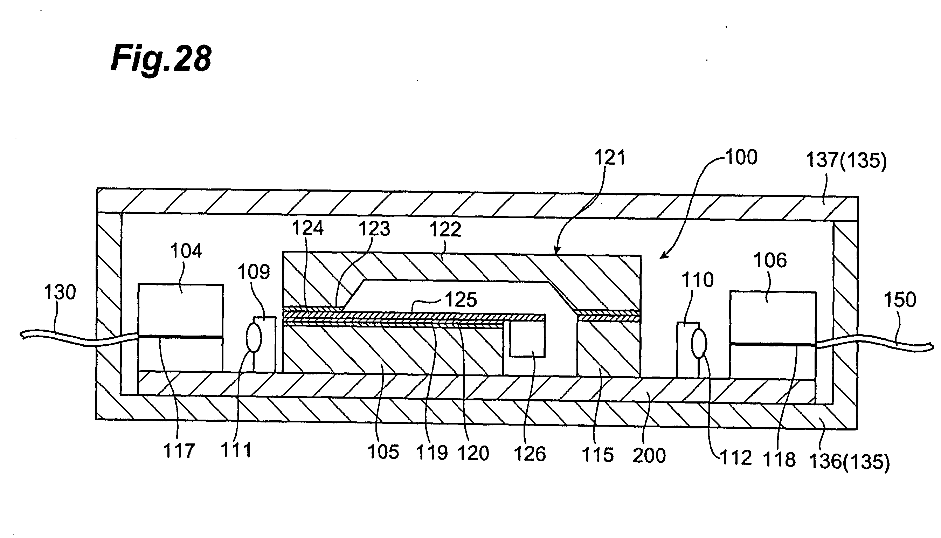

The above mentioned optical switch 1 is housed in a box type package 135, as shown in Fig. 27 and Fig. 28. When the optical switch 1 is installed in such as package 135, the platform 200, where the optical fiber arrays 104 and 106, collimator lens arrays 109 and 110, optical fiber 113 and collimator lens 114 are mounted in advance, is inserted in the package main body 136 of the package 135, and secured. Then the optical switch device, which is comprised of the switch element 121, main base substrate 105 and auxiliary base substrate 115, is aligned andmounted at a predetermined position of the platform 200. Then the conductive structure 124 of the switch element 121 and each electrode 119 of the main substrate 105 are wired to the voltage source 127 and electric switch 128, which are arranged outside the package main body 136. And finally, the package cover 137 is installed on top of the package main body 136, and sealed.

In the optical switch 100 constructed as above, all the mirrors 126 are maintained in an upward position during normal use, as shown in Fig. 25. In this case, light emitted from each optical fiber 117 of the optical fiber array 104 is directly entered to the corresponding optical fiber 118 of the optical fiber array 106 via the collimator lenses 111 and 112.

When such problems as adisconnectionor failureoccurs to one optical fiber 118, the mirror 126 corresponding to the optical fiber 118 descends, as shown in Fig. 23. In this case, the light emitted from the optical fiber 117 corresponding to this optical fiber 118 transmits through the collimator lens 111 and is reflected by the mirror 126, and this reflected light is entered to the optical fiber 113, which is a backup optical path, via the collimator lens 114. Therefore optical transmission does not become disabled.

Here the mirror 126 has a configuration such that the mirror 126 can be vertically driven, so compared with the case of driving the mirror 126 in a horizontal direction, the array pitch (pitch between channels) of each groove 107 of the main base substrate 105, where light spatially propagates, can be dramatically decreased. In this case, the beam divergence, which occurs when the light reflected by the mirror 126 spatially propagates, is suppressed, so light insertion loss to the optical fiber 113 canbe decreased. Particularly in light which spatially propagates at a position away from the optical fiber 113, this effect is clearly exhibited. Also decreasing the pitch between channels decreases the difference of the optical path length between each mirror 126 and the optical fiber 113, so dispersion of insertion loss of light between each channel can also be decreased.

The light reflected by the mirror 126 is directly entered into the optical fiber 113 via the collimator lens 114, so light loss due to reflection at the mirror can be minimized. In this case, the propagation distance of the light can be increased.

According to the present embodiment, the optical fiber 113 as the backup optical path is created so as to extend vertically with respect to the optical fibers 117 and 118 as normal-use optical paths, but the optical fiber 113 may be created so as to extend obliquely with respect to the optical fibers 117 and 118. In this case, the disposition angle of the mirror 126 is set such that the light from the optical fiber 117 is reflected by the mirror 126, and is directed to the optical fiber 113 with certainty.

Also according to the present embodiment, the light emitted from the optical fiber 117 is entered to the optical fiber 118, but instead the light emitted from the optical fiber 118 may be entered to the optical fiber 117. In this case, when the optical fiber 113 as the backup optical path is used, the light emitted from the optical fiber 113 is reflected by the mirror 126 after transmitting through the collimator lens 114, and this reflected light is entered to the optical fiber 117 via the collimator lens 111.

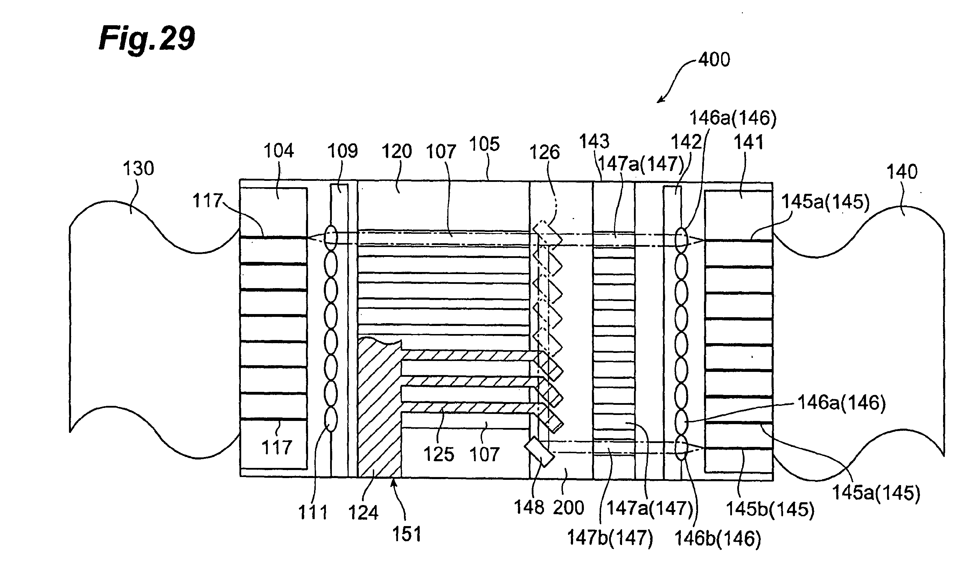

Fig. 29 is ahorizontal cross-sectional viewdepicting the eighth embodiment of the optical switch according to the present invention. In Fig. 29, identical or similar composing elements as the above mentioned embodiments are denoted with the same reference numerals, for which descriptions are omitted.

In Fig. 29, the optical switch 400 of the present embodiment is comprised of the optical fiber array 141, collimator lens array 142 and auxiliary base substrate 143, instead of the optical fiber array 106, collimator lens array 110 and auxiliary base substrate 115 of the above embodiments.

In the optical fiber array 141, nine optical fibers 145 exposed from the tape fiber 140 are arranged in parallel to each other, of which eight optical fibers 145a constitute the second normal-use optical path, and the remaining one optical fiber 145b, positioned at one end, constitutes the backup optical path. This means that the optical fiber 145b extends in parallel with each optical fiber 117 and 145a.

The collimator lens array 142 has nine collimator lenses 146, of which eight collimator lenses 146a are for optically coupling the optical fibers 117 and 145a, which are normal-use optical paths, and the other collimator lens 146b is for optically coupling the optical fiber 145b to the optical fiber 117.

In the auxiliary base substrate 143, nine groove sections 147 are created, and the groove section 147 is comprised of eight groove sections 147a corresponding to each collimator lens 146a, and one groove section 147b corresponding to the collimator lens 146b.

At the position corresponding to the groove section 147b between the main base substrate 105 and auxiliary base substrate 143, a fixed mirror 148, for horizontally reflecting the light reflected by the mirror 126 to the optical fiber 145a, is disposed. This fixed mirror 148 is disposed so as to incline 45° with respect to the core of the optical fibers 117 and 145, just like the mirror 126.

When the mirror 126 descends so as to switch to the backup optical path in the optical switch 400 constructed in this way, the light emitted from the optical fiber 117 spatially propagates through the groove section 107 of the main base substrate 105 via the collimator lens 111, and is reflected by the mirror 126. And the reflected light spatially propagates between the main base substrate 105 and auxiliary base substrate 143, and is reflected by the fixed mirror 148. And the reflected light spatially propagates through the groove section 147b of the auxiliary base substrate 143, and is entered to the optical fiber 145a via the collimator lens 146b.

According to the present embodiment described above, the plurality of optical fibers 145a as normal-use optical paths and the optical fiber 145b as the backup optical path are integrated using one optical fiber array 141 and one optical fiber tape conductor 144, so strength of the optical fiber as the backup optical path increases and reliability improves. Also the optical fiber as the backup optical path can be easily assembled to the platform 200. Also the plurality of collimator lenses 146a corresponding to the normal-use optical paths and the collimator lens 146b corresponding to the backup optical path are integrated as one collimator lens array 142, so the collimator lenses can be easily assembled.

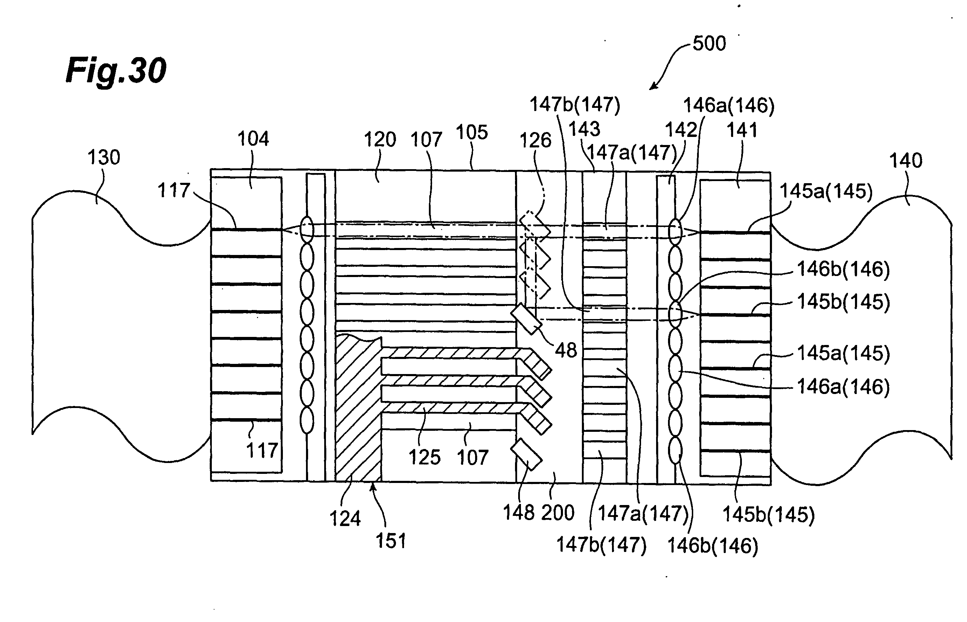

Fig. 30 is a horizontal cross-sectional view depicting the ninth embodiment of the optical switch according to the present invention. In Fig. 30, identical or equivalent composing elements as the above mentioned embodiments are denoted with the same reference numerals, for which descriptions are omitted.

In Fig. 30, the optical switch 500 of the present embodiment is an optical switch where two sets of three pairs of the normal-use optical paths and one backup optical path are set.

In this optical switch 500, six optical fibers 145a, out of the nine optical fibers 145 maintained in the optical fiber array 141, are used as normal-use optical paths, two optical fibers 145b are used as the backup optical paths, and the remaining one optical fiber is not used. The collimator lenses 146 (146a, 146b) of the collimator lens array 142 and the groove sections 147 (147a, 147b) of the auxiliary base substrate 143 are constructed so as to correspond to the optical fibers 145 (145a, 145b).

Two fixed mirrors 148 are disposed between the main base substrate 105 and auxiliary base substrate 143 corresponding to the number of optical fibers 145b. The optical switch 500 has the switch element 151 which has six cantilevers 125, instead of the switch element 121 in the above mentioned embodiments.

The present invention is not limited to the above mentioned embodiments. For example, the mirror is vertically moved using an electrostatic force in the above embodiments, but the mirror may be vertically moved by an electromagnetic force, for example.

Also in the above embodiments, the position where the mirror transmits the light which propagates on the optical path is defined as free status, but a position where the mirror blocks the light which propagates on the optical path may be defined as free status. In this case, the mirror may be self-maintained at a position where light which propagates on the optical path transmits through using a magnetic force, for example.

The optical switches of the above embodiments are 1 × 2 switches or 1 × 1 switches which are arrayed, but may be a standalone 1 × 2 switch or a 1 × 1 switch. And the present invention can be applied to n × n matrix switches.

According to the above embodiments, a plurality of identical optical switches are arrayed, but a plurality of different optical switches may be arrayed.

The optical switch of the above embodiments can function as an optical attenuator. In other words, transmittance of the light can be changed by adjusting the drive stroke of the mirror by controlling the electrostatic force or electromagnetic force.

In the above embodiments, the mirror is vertically moved by an electrostatic force which is generated between the cantilever and electrode, but it may be constructed that the mirror is vertically moved using an electromagnetic force.

A part of the optical paths of the optical switch according to the present invention is comprised of optical fibers, but the present invention can be applied to an optical switch where a part of the optical paths are comprised of optical guides.

In the above mentioned seventh, eighth and ninth embodiments, the backup optical path is not limited to one, but various types of optical switches, where a different number of normal-use optical paths / backup optical paths are used, can be constructed.

### Industrial Applicability

According to the present invention, a mirror is installed on the cantilever supported by the base element, andthemirror is verticallymovedbetween the firstposition, where light propagating on the optical path is transmitted through, and the second position, where light propagating on the optical path is blocked, so a compact and integrated ON/OFF switch, a 1 × 2 switch and an n × n matrix switch can be created.

As a result, downsizing and integration of optical switches can be attempted in the field of optical communication and optical measurement.

## Claims

1. An optical switch, comprising:
a base element having an optical path;
a cantilever which is supported by said base element;
a mirror which is installed on said cantilever for blocking light which propagates on said optical path; and
drive means for moving said mirror up and down between a first position where light propagating on said optical path is transmitted and a second position where light propagating on said optical path is blocked,
said mirror being arranged to be above said base element when said mirror is at said first position, and
saidmirror being arranged to be positioned at an upper surface part of said base element when said mirror is at said second position.

2. The optical switch according to Claim 1,
wherein said drive means further comprises:
an electrode disposed on said base element; and
means for generating an electrostatic force between said electrode and said cantilever.

3. The optical switch according to Claim 2,
wherein a spacer for maintaining a gap between said electrode and said cantilever when said mirror is at said second position is disposed on said electrode.

4. The optical switch according to Claim 2, further comprising position maintaining means for maintaining said mirror at said first position or said second position.

5. The optical switch according to Claim 4,
wherein said mirror is made of a magnetic substance, said electrode is made of a permanent magnet, and said position maintaining means is means for maintaining said mirror at said second position by the magnetic force generated between said mirror and said electrode.

6. The optical switch according to Claim 4,
wherein said mirror is made of a permanent magnet, said electrode is made of a magnetic substance, and said position maintaining means is means for maintaining said mirror at said second position by the magnetic force generated between said mirror and said electrode.

7. The optical switch according to Claim 4, further comprising an electromagnet for clearing the position retention of said mirror due to said position maintaining means.

8. The optical switch according to Claim 1,
wherein said mirror has been formed so as to be integrated with said cantilever using x-ray lithography and electro-forming.

9. The optical switch according to Claim 1,
wherein a surface of said mirror is coated with a film of any one of gold, silver and aluminum.

10. The optical switch according to Claim 1, further comprising a silicon structure which is disposed above said base element so as to sandwich said cantilever, so that said cantilever, said mirror and said silicon structure constitute the switch element.

11. The optical switch according to Claim 10,
wherein said switch element has been formed by forming said cantilever with saidmirror on a surface of said silicon structure and etching said silicon structure using fluorine gas.

12. The optical switch according to Claim 10,
wherein said switch element has been formed by forming a mask pattern section where said switch element is to be formed on a surface of a silicon wafer such that said mask pattern section has a slanted angle with respect to an orientation flat of said silicon wafer, then forming said cantilever with said mirror on the surface of said silicon wafer, and etching said silicon wafer from the surface side using an etchant.

13. The optical switch according to Claim 12,
wherein said etchant is tetramethylammonium hydroxide.

14. The optical switch according to Claim 2,
wherein an insulation layer is provided on an upper surface of said electrode, and
wherein said cantilever is supported by said base element so that said cantilever is capable of abutting on and separating from said insulation layer.

15. An optical switch, comprising:
a base element having a plurality of first normal-use opticalpaths, apluralityofsecondnormal-useopticalpaths which are disposed facing each one of said first normal-use optical paths and at least one backup optical path;
a plurality of movable mirrors which are supported by said base element and reflect light from said first normal-use optical paths or said backup optical path in a horizontal direction; and
drive means formoving each one of saidmovablemirrors up and down.

16. The optical switch according to Claim 15, further comprising a plurality of collimator lenses for optically coupling said first normal-use optical paths and saidsecondnormal-useopticalpaths, andopticallycoupling said first normal-use optical paths and said backup optical path.

17. The optical switch according to Claim 15,
wherein said backup optical path is constructed so as to extend in a vertical or oblique direction with respect to each one of said first normal-use optical paths.

18. The optical switch according to Claim 15,
wherein said backup optical path is constructed so as to extend in parallel with eachone of said first normal-use optical paths, and
wherein a fixed mirror for reflecting light having been reflected by said movable mirror or light from said backup optical path in a horizontal direction is disposed on said base element.

19. The optical switch according to Claim 15,
wherein said drive means comprises:
a plurality of cantilevers cantilever-supported by said base element and having said movable mirror fixed thereto;
a plurality of electrodes which are disposed on an upper surface of said base element so as to face each one of said cantilevers; and
means for generating an electrostatic force between said cantilever and said electrode.

20. An optical switch for protection, wherein the optical switch according to Claim 5 is applied.
